# EUROPEAN PATENT APPLICATION

(11) **EP 4 753 111 A1**
(43) Date of publication of application: **03.06.2026**
(21) Application number: 24216912.6
(22) Date of filing: 02.12.2024
(51) Int. Cl.: H02K 1/14, H02K 15/40, H02K 15/60, H02K 7/18

(54) **CLAMPING DEVICE FOR TRANSPORTING AN ELECTRIC GENERATOR SEGMENT, RESPECTIVE ELECTRIC GENERATOR SEGMENT, ELECTRIC GENERATOR, WIND TURBINE AND METHOD**

(71) Applicant: Siemens Gamesa Renewable Energy A/S, 7330 Brande (DK)
(72) Inventor: Jensen, Simon Vyff, 7160 Tørring (DK); Jensen, Kim Robert Braun, 8600 Silkeborg (DK)
(74) Representative: SGRE-Association

(57) **Abstract**

The invention relates to a clamping device (31) for being used as a mechanical interface between an electric generator segment (15) and a transporting means which is adapted to transport the segment (15), wherein the clamping device (31) comprises a connection component (24) and two clamping components (26, 30), wherein the connection component (24) is adapted to be arranged in a through hole (22) of the segment (15), wherein the clamping components (26, 30) are attachable with each other by the connection component (24) being arranged in the through hole (22) such that a part of the segment (15) being arranged on the through hole (22) is clamped between the clamping components (26, 30), wherein at least one of the clamping components (26, 30) is connected to or comprises a connection means (34) being connectable to a connection means of the transporting means.

## Description

The present invention relates to a clamping device for being used as a mechanical interface between an electric generator segment and a transporting means which is adapted to transport the segment.

Furthermore, the present invention relates to an electric generator segment forming a part of a rotor or of a stator of an electric generator.

Additionally, the present invention relates to an electric generator for a wind turbine, comprising a stator and a rotor.

Furthermore, the present invention relates to a wind turbine.

Finally, the present invention relates to a method for transporting an electric generator segment.

A wind turbine typically comprises an electric generator and a rotatably mounted hub with several blades. The wind-driven rotation of the hub is transferred to a rotor of the electric generator. The electric generator is typically arranged within a nacelle, wherein the nacelle is arranged on top of a tower of the wind turbine. Modern wind turbines can have a total height of tens or hundreds of meters. The output power of the electric generator can be in the range of multi-megawatts, particularly between 1 and 40 megawatts. Hence, components of the electric generator like a stator or the rotor are typically quite bulky and heavy and comprise weights in the order of tons or more. To simplify transportation and mounting processes, the stator and/or the rotor of the generator is often made of several pieces or segments, respectively, which are easier to handle than the complete stator or rotor. After being brought to their designated positions, the segments are mounted together and attached to each other.

A generator having a stator and a rotor which consist of several segments and a mounting concept for attaching these segments to each other by screws is disclosed in DE 10 2010 061 966 A1. WO 2022 / 263 070 A1, EP 4 156 465 A1 and EP 3 918 694 B1 disclose further concepts for generators having a stator which is divided into segments. A further concept regarding a wind turbine generator which constitute technical background for the present invention is disclosed in EP 4 068 574 A1.

Regarding the construction site where the wind turbine is installed, it is a challenging task to transport or hoist the segment to its designated position where it gets connected to other components of the generator or wind turbine, respectively. Typically, a crane is used as a transporting means in this context. Coupling means for connecting the segment with the transporting means are often heavy and bulky and, hence, not easy to handle. Another negative aspect is that this coupling means is often connected to the segment by screws which are screwed into threaded bores of the segment. Particularly since the actual purpose of these threaded bores is the connection between the segment and other components of the generator or wind turbine, respectively, the mechanical strengths of the thread is often not sufficient to withstand the large loads which occur during the transportation if the segment. Hence, the thread could be damaged such that it cannot be used later without problems in the context of its actual purpose, i.e., for connecting the component to other components.

It is an object of the present invention to provide an enhanced concept regarding a generator of a wind turbine having a stator and/or a rotor which consist of several segments, particularly regarding transportation processes of the segments on the construction site of the wind turbine to be mounted.

According to the present invention, to achieve this object, a clamping device as described initially comprises a connection component and two clamping components, wherein the connection component is adapted to be arranged in a through hole of the segment, wherein the clamping components are attachable with each other by the connection component being arranged in the through hole such that a part of the segment being arranged on the through hole is clamped between the clamping components, wherein at least one of the clamping components is connected to or comprises a connection means being connectable to a connection means of the transporting means.

The clamping device realizes a mechanical link between the segment and the transporting means. The clamping is generated by the clamping device and ensures a sufficient connection between the components of the clamping device and between the clamping device and the segment. The clamping ensures that forces which occur during the transportation of the segment are transferred from the transporting means to the segment. To withstand these forces, the clamping device or the components of the clamping device, respectively, consist of a material to ensure a sufficient mechanical stability. The clamping device or of the components of the clamping device, respectively, can consist of a metal, particularly of steel. The force which holds the clamping components and the connection component together can realize the clamping force. Hence, one of the central ideas of the invention is to use the clamping device for realizing a clamping means which can be used for connecting the transportation means and the segment. Particularly in contrast to the usage of the threaded bores of the respective segment as described initially, where a load peak occurs on the thread, the clamping connection realizes the effect that the mechanical load is spread over a larger area of the segment such that damages can be avoided.

Preferably, the part of the segment, which is clamped between the clamping components, surrounds the through hole, particularly completely. For instance, this clamping section of the segment has a circular shape. This shape can be ring-like, wherein the through hole can be arranged in the center of the clamping section. The clamping section is the part of the segment on which the clamping force acts in. The through hole can be provided on a plate-like, particularly even, section of the segment, for instance on a wall. In other words, the clamping section and/or the clamping components can be flat or plate-like, respectively. The clamping section and the clamping components preferably realize a sandwich-like arrangement, wherein the clamping section is arranged between the clamping components. In other words, the clamping components can be arranged on both sides of the clamping section.

Preferably, the connection component comprises at least one bore with an internal thread, wherein at least one of the clamping components is or comprises at least one rod having an external thread, wherein the clamping components are attachable to each other by a screwed joint being realized by the at least one rod being screwed into the at least one bore. Regarding the state where the connection component is arranged in the through hole, the at least one bore or hole, respectively, is located such that it can be reached from the outside to be able to insert the at least one rod. The clamping force depends on the force or strength which was used or present, respectively, for screwing the at least one rod into the at least one bore.

The clamping component, which comprises the rod and the connection means, can be a lifting eye bolt. Particularly in this embodiment, the connection means can be a lug which is connectable to the connection means of the transporting means being a hook of the transporting means. The rod can comprise a free end which is inserted into the bore, wherein the lug is arranged on the other end of the rod.

The connection component can be or can comprise a bushing. The bushing particularly comprises a sleeve-like structure or, in other words, a hollow and cylindrical shape, wherein the hollow interior of the bushing realizes the bore. An outer shape, particularly an outer diameter, of the bushing can correspond to an inner shape, particularly an inner diameter, of the through hole. Particularly, these shapes can be identically.

Preferably, an axial length of the through hole exceeds an axial length of the bushing. Thus, a clearance or gap, respectively, remains between the front end of the bushing and the connection component comprising the rod. Apart from the screwed joint, there is no contact between the bushing and the connection component having the rod. This leads to the effect that no further mechanical load is transferred from this connection component to the bushing which would lead to a reduction of the clamping force.

The clamping device can comprise a securing means to prevent a relative rotation between the segment and at least a part of the clamping device. Particularly if there is a rotational symmetry regarding at least a part of the clamping components and of the connection component, screwing the at least one bolt into the at least one bore could lead to a relative rotation between the clamping component and the segment which could potentially thwart the creation of the clamping force. Particularly, the securing means connects the respective connection component and the segment such that a relative rotation between these components is prevented. The securing means can be a part of the clamping component or of the connection component or can be a separate component. To prevent this rotation, the securing means of the clamping device can be connected to a securing means of the segment. For instance, the securing means comprises a threaded bolt which runs through a through hole of the respective clamping component and which is screwed into a bore of the segment.

Preferably, at least one of the clamping components is or comprises a flange, wherein the clamping components are attachable with each other by the connection component being arranged in the through hole such that the part of the segment being arranged on the through hole is clamped between the flange of one the clamping components and the other clamping component, particularly the flange of the other clamping component. The, particularly circular, flange comprises a flat and/or plate-like structure which is in contact with the respective clamping section. The geometric structure of the flange ensures a large contact area between the respective connection component and the clamping section and, hence, a reduction of local mechanical stress.

According to an optional embodiment of the invention, the flange of the connection component, which particularly comprises the at least one rod, is at least one washer. The washer is a circular and plate-like component having a, preferably central, hole through which the rod runs. The rod and the flange, particularly the washer, can be separate components. Preferably, the washer is arranged between a head of the rod and the segment or clamping section, respectively.

Preferably, the connection component and one of the clamping components are formed by a common component. Hence, the common component comprises the one of the clamping components and the connection component. The clamping component and the connection component are preferably separate parts of the common component. The common component can be realized by one piece. The common component can comprise separate pieces being the clamping component and the connection component which are attached to each other, e.g., by a welding connection. According to this embodiment, particularly the connection component being the bushing and the clamping component being the flange are realized by the common component. The, particularly circular, flange can be arranged on one of the end faces of the bushing. On the other end face, an opening of the bore can be arranged.

Furthermore, according to the present invention, the object is solved by an electric generator segment as specified above, wherein this electric generator segment comprises a connection component of a clamping device according to the foregoing description, wherein the connection component is arranged in a through hole of the electric generator segment. All features, aspects, and advantages which have been explained for the clamping device according to the present invention are transferable to the electric generator segment according to the present invention and vice versa.

The electric generator segment can be a stator segment of a stator of the electric generator or a rotor segment of a rotor of the electric generator. The segment can be or comprise a support structure for holding electromagnetic active components, for instance a lamination stack and/or windings which can be made of electrically conductible wires and/or permanent magnets. The support structure can comprise holding elements, wherein a longitudinal direction of each of the holding elements can extend along a longitudinal direction of the segment or electric generator, respectively. The holding elements can have a hollow structure, particularly being realized by hollow metal profiles. The profiles can have a rectangular shape. The profiles can consist of, particularly four, walls. The walls can comprise at least one access opening such that the connection component and at least one of the clamping components can be arranged in their designated positions and/or attached or fixed to each other via a tool, particularly a screw wrench, which is fed through the access opening. Along a circumferential direction of the segment or the electric generator, respectively, several holding elements can be provided. Preferably, the through hole is arranged on a plate-like, particularly even, section of the electric generator segment. This section can be one of the walls of the holding element.

The electric generator can comprise an inner stator and an outer rotor, wherein the inner stator is arranged radially inwards with respect to the rotor. According to this embodiment, regarding the segment which is adapted to realize a part of the inner stator, the support structure can be arranged radially inwards with respect to the electromagnetic active components, and/or regarding the segment which is adapted to realize a part of the outer rotor, the support structure can be arranged radially outwards with respect to the electromagnetic active components. Alternatively, the electric generator can comprise an inner rotor and an outer stator, wherein the inner rotor is arranged radially inwards with respect to the stator. According to this embodiment, regarding the segment which is adapted to realize a part of the inner rotor, the support structure can be arranged radially inwards with respect to the electromagnetic active components, and/or regarding the segment which is adapted to realize a part of the outer stator, the support structure can be arranged radially outwards with respect to the electromagnetic active components.

Preferably, the connection component is pressed into the through hole. According to this embodiment, the outer shape, particularly an outer diameter, of the connection component can be slightly larger than an inner shape, particularly an inner diameter, of the through hole. The press connection can cause a prevention form the connection component from being lost. Moreover, the press connection can prevent a relative rotation between the segment and at least a part of the clamping device. Hence, the press connection can be provided additionally or alternatively to the securing means.

Additionally, according to the present invention, the object is solved by an electric generator as specified above, wherein at least one segment of the stator and/or at least one segment of the rotor is an electric generator segment according to the foregoing description passages. All features, aspects, and advantages which have been explained for the clamping device according to the present invention and/or to the electric generator segment according to the present invention are transferable to the electric generator according to the present invention and vice versa.

The electric generator comprises that stator and the rotatably mounted rotor, which can be arranged in a housing of the electric generator. Electromagnetic active components, particularly a lamination stack and/or windings and/or permanent magnets, of the stator and of the rotor are provided, wherein in a state where the rotor rotates, electromagnetic interactions between the electromagnetic active components cause the generation of electric energy using the electric generator.

The segments of the stator or rotor can be adjacently located in a circumferential direction of the stator or the rotor or the electric generator, respectively, to form a ring-like structure. Regarding a cross section perpendicular to the longitudinal direction of the electric generator, the segments can comprise a shape which is the shape of an arc or a sector of a circle. The number of the segments which realize the stator or the rotor can be at least two and at most sixteen.

Preferably, the electric generator segment and at least one adjacent segment are connected to each other by the connection component. According to this embodiment, the clamping device or, more precisely, the connection component which remains within the through hole synergistically acts as a means for transporting the respective segment on the one hand and as a connection means between adjacent segments of the resulting electric generator on the other hand. For instance, the bores of a pair of adjacent connection components, particularly bushings, can be aligned, wherein a connection screw can be screwed into or run through both bores.

Moreover, according to the present invention, the object is solved by a wind turbine as specified above, comprising an electric generator according to the foregoing description passages, wherein a wind-induced rotation of a hub of the wind turbine is transferrable to the rotor for generating electric energy. All features, aspects, and advantages which have been explained for the clamping device according to the present invention and/or for the electric generator segment according to the present invention, and/or for the electric generator according to the present invention are transferable to the wind turbine according to the present invention and vice versa.

The wind turbine according to the present invention can comprise a tower on which a nacelle is arranged. On the front of the nacelle, a hub with several, particularly three, blades can be provided. The hub can be mounted such that it can rotate around a rotation axis. The wind-driven rotation of the hub is transferred to the electric generator which is preferably located within the nacelle. The rotation of the hub can be transferred to the electric generator by a main shaft which extends along the rotation axis. The rotation axis can define a longitudinal direction of the wind turbine and of the generator. The wind turbine can be a direct drive wind turbine which means that the hub is directly connected to the rotor, i.e., without having a gear for translating rotational frequencies in between. The total height of the wind turbine can be in the order of tens or hundreds of meters. The output power of the wind turbine which is generated by the generator can be in the range of multi-megawatts, particularly between 1 and 40 megawatts.

Finally, according to the present invention, the object is solved by the above stated method for transporting an electric generator segment using a clamping device according to the description above, wherein the electric generator segment having a through hole is provided, wherein the connection component is already or gets arranged in the through hole, wherein the clamping components are attached with each other by the connection component such that a part of the segment being arranged on the through hole is clamped between the clamping components, wherein a connection means of at least one of the clamping components gets connected to a connection means of a transporting means, wherein the electric generator segment is transported by the transporting means while the clamping device acts as a mechanical interface between the electric generator segment and the transporting means. All features, aspects, and advantages which have been explained for the clamping device according to the present invention and/or for the electric generator segment according to the present invention, and/or for the electric generator according to the present invention and/or for the wind turbine according to the present invention are transferable to the method according to the present invention and vice versa.

Regarding the first step of this method, the electric generator segment having the through hole is provided. Preferably, the segment is pre-manufactured and has the connection component already arranged within the through hole. Alternatively, the connection component can be arranged in the through hole in a certain step. Regarding the next step, the clamping components are attached with each other to realize the clamping force. Next, the connection means of the clamping device and the connection means of the transporting means are connected to each other to allow the transportation process of the segment.

Preferably, after transporting the electric generator segment, the clamping device is dismantled and the connection component which is arranged in the through hole is removed from the through hole. According to this embodiment, the through hole can be used synergistically as a means regarding the final generator. Particularly, the through hole can act as a ventilation opening through which air for cooling components of the generator is guided. Additionally or alternatively, the clamping device can be reused again for transportation processes of other segments.

Other objects and features of the present invention will become apparent from the following detailed description considered in conjunction with the accompanying drawings. The drawings, however, are only principle sketches designed solely for the purpose of illustration and do not limit the invention. The drawings show:
Fig. 1 a view of a wind turbine according to an embodiment of the present invention, comprising an electric generator according to an embodiment of the present invention, wherein the electric generator comprises a rotor and a stator which consists of several segments according to an embodiment of the present invention,
Fig. 2 a cut through the electric generator of the wind turbine of fig. 1 wherein the cutting plane is indicated by the line II - II in fig. 1,
Fig. 3 a perspective view of a stator segment of the generator auf fig. 2,
Fig. 4 a perspective view of a cut through the segment of fig. 3, wherein the cutting plane is indicated by the line IV - IV in fig. 3,
Fig. 5 a perspective view of a cut through the segment of fig. 3, wherein the cutting plane is indicated by the line V - V in fig. 3,
Fig. 6 a two-dimensional cut through the segment of fig. 3, wherein the cutting plane is the same as the cutting plane in fig. 5, wherein a clamping device according to an embodiment of the present invention is mounted to the segment, and
Fig. 7 the same view of the segment of fig. 3 as fig. 6, wherein the segment is connected to an adjacent segment.

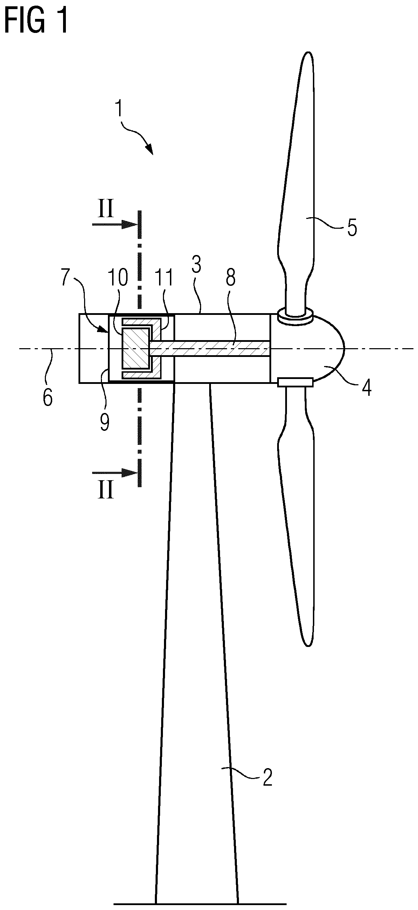

Fig. 1 shows a wind turbine 1 according to an embodiment of the present invention. The wind turbine 1 comprises a tower 2 on which a nacelle 3 is arranged. On the front of the nacelle 3, a hub 4 with several, particularly three, blades 5 is provided. The hub 4 is mounted such that it can rotate around a rotation axis which defines a longitudinal direction 6. The wind-driven rotation of the hub 4 is transferred to an electric generator 7 according to an embodiment of the present invention which is located within the nacelle 3. The rotation of the hub 4 is transferred to the electric generator 7 by a main shaft 8 which extends along the rotation axis 6. The electric generator 7 comprises a stator 10 and a rotor 11, exemplarily an inner stator 10 and an outer rotor 11. The stator 10 and the rotor 11 are arranged within a housing 9 of the generator 7. While the stator 10 is non-rotatably mounted, the rotor 11 is connected to the main shaft 8 such that the rotation of the hub 4 is directly transferred to the rotor 11. The wind turbine 1 is a direct drive wind turbine. Alternatively, the shaft 8 and the rotor 11 can be connected by a gear assembly. A bearing assembly (not shown in fig. 1) is provided to hold the shaft 8 in position. While the total height of the wind turbine 1 is in the order of tens or hundreds of meters, the output power of the wind turbine 1 which is generated by the generator 7 can be in the range of multi-megawatts, particularly between 1 and 40 megawatts.

The rotation axis and, hence, the longitudinal direction 6 is arranged horizontally but can be also tilted with respect to a horizontal direction. A radial direction 12 is perpendicularly with respect to the longitudinal direction 6 and points radially outwards away from the rotation axis. A circumferential direction 13 is given by the direction of a point which rotates around the rotation axis. The longitudinal direction 6 refers not only to the generator 7, but also to the stator 10 and the rotor 11 as well as to the segments 15. The same holds true for the other directions 12, 13.

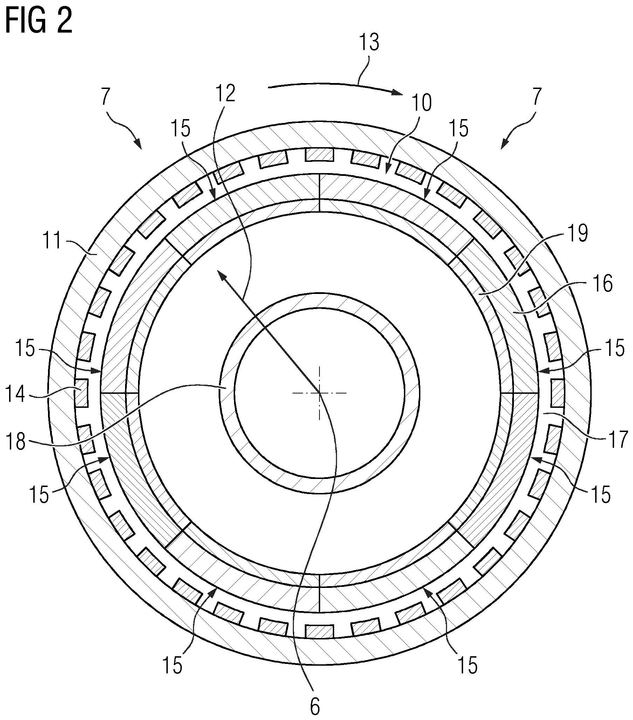

Fig. 2 shows a cross-section through the generator 7, wherein the sectional plane is perpendicular to the longitudinal direction 6. The cutting plane is indicated by the line II - II in fig. 1. The stator 10 is attached to the housing 9 (not shown in fig. 2). Permanent magnets 14 are arranged on the rotor 11 on a side facing the stator 10. Stator 10 comprises several stator segments 15, each comprising a lamination stack 16. In this example, eight stator segments 15 are provided. Between the stator 10 and the rotor 11, an air gap 17 is provided. Stator 10 is mounted on a hollow shaft 18 via a stator support structure 19 of the respective stator 10. A rotation of the rotor 11 with respect to the stator 10 induces an electrical current into stator coils formed by stator windings.

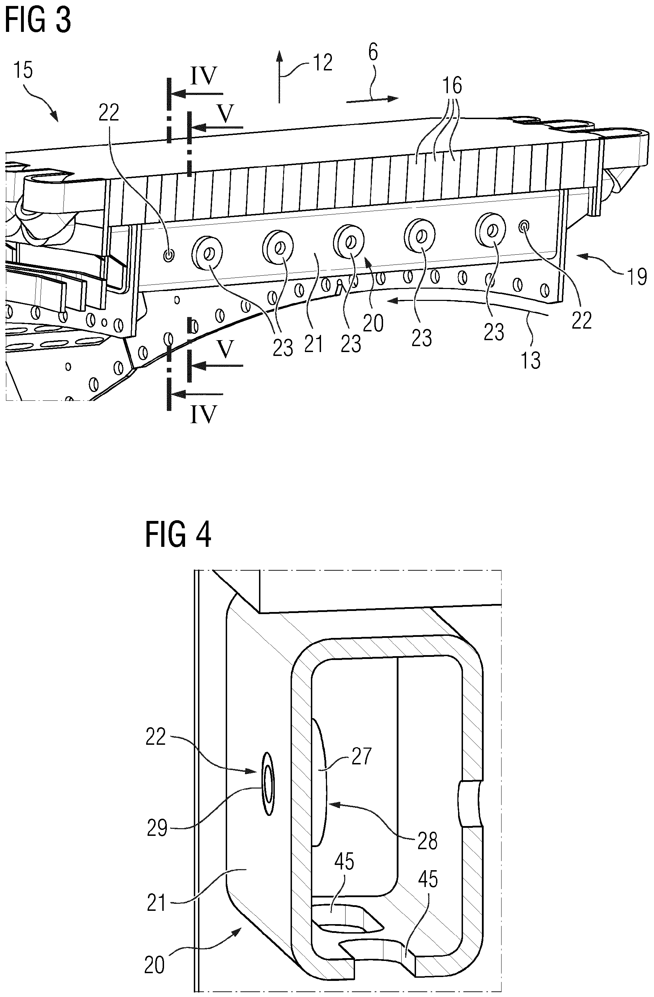

Next, it is referred to fig. 3 which shows a perspective view of one of the segments 15. Support structure 19 comprises holding elements 20 being hollow metal profiles which carry the lamination stack 16. A longitudinal direction of each of the holding elements 20 extend along the longitudinal direction 6. The profiles have a rectangular shape and consist of a metal, for instance steel. On each of the two lateral ends of an outer wall 21 of the outermost holding element 20, a through hole 22 is provided. Additionally, several screwing sections 23 are arranged along the longitudinal direction of this holding element 20 or a wall 21, respectively, which are used as a means for attaching adjacent elements 15 with each other.

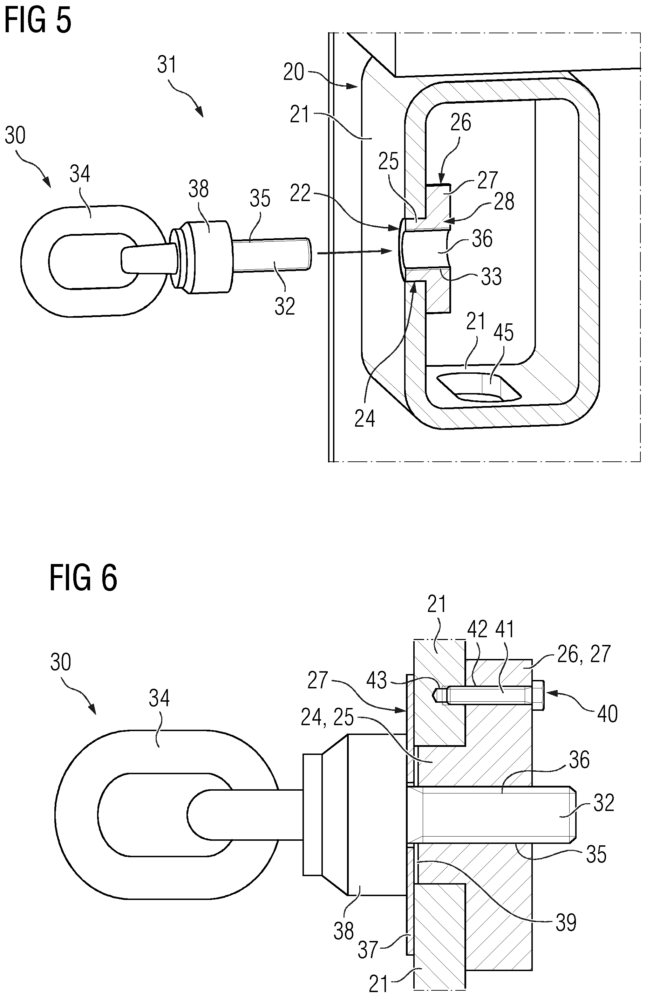

Next, it is referred to figures 4 and 5, each showing a close up view on a cut through the segment 15 or holding element 20, respectively, wherein the cutting planes are indicated by the lines IV - IV and V - V in fig. 3. The cut of fig. 4 runs laterally beside the through hole 15. The cut of fig.5 runs through the center of the through hole 15. In the following, a transportation and the mounting process regarding the stator 10, i.e., bringing the segments 15 into their designated positions and attaching the segments 15 to each other, will be described, particularly with the help of figures 4 and 5.

According to a first step, the segment 15 is provided. A connection component 24 being a bushing 25 with a diameter of exemplarily about 40 mm is or gets arranged into the through hole 22. An inner clamping component 26 being a lateral flange 27 having a diameter of exemplarily about 80 mm and the connection component 24 are realized by a common component 28. The bushing 25 is pressed into the through hole 22. A side of the flange 27 which is directed towards the connection component 24 is in contact with an inner side of the wall 21. An axial length of the through hole 22, i.e., the thickness off the wall 21, is slightly larger than an axial length of the bushing 25 such that a step 29 between the area of the wall 21 surrounding the through hole 22 and an end face of the bushing 25 is realized. Exemplarily, the step has a depth of about 1 mm.

The connection component 24, the inner clamping component 26 and an outer clamping component 30 (see fig. 5) realize a clamping device 31 according to an embodiment of the present invention which is used as a mechanical interface between the segment 15 and a transporting means being a crane, which is not shown in the figures. The outer clamping component 30 comprises a rod 32 having an external thread 35, wherein the rod 32 is screwed into a central bore 33 of the bushing 25 having an internal thread 36, particularly being a standard M24 thread. The outer clamping component 30 realizes a lifting eye bolt, comprising a connection means 34 being a lug which is connectable to a connection means of the transporting means, i.e., a hook which is arranged on a lower end of a rope of the crane. The lifting eye bolt is a commercial off-the-shelf.

Fig. 6 shows a cut through the clamping device 31 being in a state where the rod 32 is screwed into the bore 33 and through the respective components of the segment 6. As it becomes apparent from this figure, also the outer clamping component 30 comprises a flange 27 which is a washer 37 being arranged between an outer side of the wall 21 and a head 38 of the rod 32. Because of the step 29, a clearance or a gap 39 between a lower side of the washer 37 and the front end surface of the bushing 25 occurs. As a consequence, a clamping force which results from the screwed joint shown in fig. 6 only acts on a part of the wall 21 which is sandwiched between the washer 37 and the flange 27 of the inner clamping component 26.

Although the connecting means 26 is pressed into the through hole 22, there is a risk that the connecting means 26 rotates while the rod 32 is screwed into the bore 33 of the bushing 25. To overcome this problem, the clamping device 31 comprises a securing means 40 to prevent a relative rotation between the segment 15 and at least a part of the clamping device 31. The securing means 40 connects the inner connection component 26 and the segment 15 such that a relative rotation between these components is blocked. The securing means 40 comprises a threaded bolt 41 which runs through a through hole 42 of the flange 27 of the inner clamping component 26 and which is screwed into a bore 43 of the wall 21.

After the segments 15 of the stator 10 have been transported to their designated positions, the segments 15 are attached to each other by inserting screws into the screwing sections 23 (see fig. 3) of the support structures 19 of adjacent segments 15. Openings of the screwing sections 23 are correlated to allow these screws to be screwed into the screwing sections 23. Furthermore, the outer clamping component 30 is unscrewed from the common component 28.

According to a first alternative, the common component 28 is removed from the through hole 22, wherein access openings 45 of one of the walls 21 of the support structure 19 are provided to be able to remove the common component 28, which can then be used in the context of another transportation process of another segment 15. The through hole 22 can act as a ventilation opening through which air for cooling components of the generator 7 is guided during its operation.

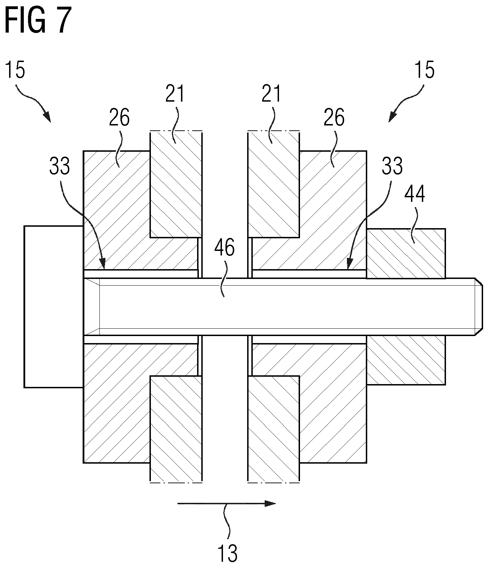

According to a second alternative, the common component 28 remains in the through hole 22, wherein two adjacent segments 15 are connected to each other by their inner connection components 26. This situation is shown in fig. 7 which shows a cut through these connection components 26. As it can be seen from this figure, the walls 21 of the two segments 15 are spaced apart from each other since the screwing sections 23, which are further used for connecting these segments 15, comprise protrusions from the outer side of the respective wall 21. A threaded bolt 46 runs through the aligned bores 33 of the common components 28 and is secured by a nut 44.

For the sake of completeness, it is mentioned that the described concept regarding the transportation of the segments 15 being segments of the stator 10 can also be applied for segments 15 being segments of the rotor 11.

Although the present invention has been described in detail with reference to the preferred embodiment, the present invention is not limited by the disclosed examples from which the skilled person is able to derive other variations without departing from the scope of the invention.

Independent of the grammatical term usage, individuals with male, female or other gender identities are included within the term.

## Claims

1. Clamping device (31) for being used as a mechanical interface between an electric generator segment (15) and a transporting means which is adapted to transport the segment (15), wherein the clamping device (31) comprises a connection component (24) and two clamping components (26, 30), wherein the connection component (24) is adapted to be arranged in a through hole (22) of the segment (15), wherein the clamping components (26, 30) are attachable with each other by the connection component (24) being arranged in the through hole (22) such that a part of the segment (15) being arranged on the through hole (22) is clamped between the clamping components (26, 30), wherein at least one of the clamping components (26, 30) is connected to or comprises a connection means (34) being connectable to a connection means of the transporting means.

2. Clamping device (31) according to claim 1, **characterized in that** the connection component (24) comprises at least one bore (33) with an internal thread (36), wherein at least one of the clamping components (26, 30) is or comprises at least one rod (32) having an external thread (35), wherein the clamping components (26, 30) are attachable to each other by a screwed joint being realized by the at least one rod (32) being screwed into the at least one bore (33).

3. Clamping device (31) according to claim 2, **characterized in that** the connection component (24) is or comprises a bushing (25).

4. Clamping device (31) according to claim 3, **characterized in that** an axial length of the through hole (22) exceeds an axial length of the bushing (25).

5. Clamping device (31) according to one of the claims 2 to 4, **characterized by** a securing means (40), particularly being connectable to a securing means of the segment (15), to prevent a relative rotation between the segment (15) and at least a part of the clamping device (31).

6. Clamping device (31) according to one of the preceding claims, **characterized in that** at least one of the clamping components (26, 30) is or comprises a flange (27), wherein the clamping components (26, 30) are attachable with each other by the connection component (24) being arranged in the through hole (22) such that the part of the segment (15) being arranged on the through hole (22) is clamped between the flange (27) of one the clamping components (26, 30) and the other clamping component (26, 30), particularly the flange (27) of the other clamping component (26, 30).

7. Clamping device (31) according to claim 6, **characterized in that** the flange (27) of the connection component (24), which particularly comprises the at least one rod (32), is at least one washer (37).

8. Clamping device (31) according to one of the preceding claims, **characterized in that** the connection component (24) and one of the clamping components (26, 30), particularly the connection component (24) being the or a bushing and the clamping component being the flange (27), are formed by a common component (28).

9. Electric generator segment (15) forming a part of a rotor (11) or of a stator (10) of an electric generator (7), comprising a connection component (24) of a clamping device (31) according to one of the preceding claims which is arranged in a through hole (22) of the electric generator segment (15).

10. Electric generator segment (15) according to claim 9, **characterized in that** the connection component (24) is pressed into the through hole (22).

11. Electric generator (7) for a wind turbine (1), comprising a stator (10) and a rotor (11), wherein at least one segment (15) of the stator (10) and/or at least one segment (15) of the rotor (11) is an electric generator segment (15) according to claim 9 or 10.

12. Electric generator (7) according to claim 11, **characterized in that** the electric generator segment (15) and at least one adjacent segment (15) are connected to each other by the connection component (24).

13. Wind turbine (1), particularly direct drive wind turbine, comprising an electric generator (7) according to claim 11 or 12, wherein a wind-induced rotation of a hub (4) of the wind turbine (1) is transferrable to the rotor (11) for generating electric energy.

14. Method for transporting an electric generator segment (15) using a clamping device (31) according to one of the claims 1 to 8, wherein the electric generator segment (15) having a through hole (22) is provided, wherein the connection component (24) is already or gets arranged in the through hole (22), wherein the clamping components (26, 30) are attached with each other by the connection component (24) such that a part of the segment (15) being arranged on the through hole (22) is clamped between the clamping components (26, 30), wherein a connection means (34) of at least one of the clamping components (26, 30) gets connected to a connection means of a transporting means, wherein the electric generator segment (15) is transported by the transporting means while the clamping device (31) acts as a mechanical interface between the electric generator segment (15) and the transporting means.

15. Method according to claim 14, **characterized in that**, after transporting the electric generator segment (15), the clamping device (31) is dismantled and the connection component (24) which is arranged in the through hole (22) is removed from the through hole (22).
